# EUROPÄISCHE PATENTSCHRIFT

(11) **EP 3 354 917 B1**
(45) Veröffentlichungstag und Bekanntmachung des Hinweises auf die Patenterteilung: **05.02.2020**
(21) Anmeldenummer: 17206533.6
(22) Anmeldetag: 11.12.2017
(51) Int. Cl.: F16D 1/06, B23F 17/00, F16D 1/10, F16D 27/00, F16D 1/104

(54) **WELLE-NABE-VERBINDER ZAHNKUPPLUNG UND HERSTELLUNGSVERFAHREN FÜR EINEN WELLE-NABE-VERBINDER**
SHAFT HUB CONNECTOR AND MANUFACTURING METHOD FOR A SHAFT HUB CONNECTOR
ACCOUPLEMENT DENTÉ DU RACCORDEMENT ARBRE-MOYEU ET PROCÉDÉ DE FABRICATION D'UN RACCORDEMENT ARBRE-MOYEU

(30) Priorität: 12.12.2016 DE 102016124092
(43) Veröffentlichungstag der Anmeldung: 01.08.2018
(73) Patentinhaber: Kaba Gallenschütz GmbH, 77815 Bühl (DE)
(72) Erfinder: EICHNER, Harald, 77963 Schwanau-Ottenheim (DE)
(74) Vertreter: Balder IP Law, S.L.

(56) Entgegenhaltungen:
- EP-A2- 3 088 755
- DE-A1-102013 217 035
- DE-C1- 3 635 916
- US-A- 3 584 667
- US-A- 4 622 840

## Beschreibung

Die vorliegende Erfindung betrifft einen Welle-Nabe-Verbinder, umfassend ein erstes Anschlussteil, welchem ein Mitnehmerelement axialverschieblich aber drehfest zugeordnet ist, wobei das Mitnehmerelement axiale Zahnelemente zur Ausbildung einer lösbaren Stirnverzahnung mit einem zweiten Anschlussteil, sowie radiale Zahnelemente zur Ausbildung einer axialverschieblichen Verzahnung mit dem ersten Anschlussteil aufweist, sowie eine Zahnkupplung und ein Verfahren zur Herstellung eines Welle-Nabe-Verbinders.

Zahnkupplungen sind bereits seit Langem im Stand der Technik bekannt. Sie eignen sich besonders für Anwendungen, bei denen sie hohem Drehmoment ausgesetzt sind und sind in solchen Anwendungsgebieten besser geeignet als Reibkupplungen. Im Normalfall wird die Zahnkupplung im Stillstand eingerastet, oder aber zunächst mit der Wellengeschwindigkeit synchronisiert.

Eingekuppelt bieten Zahnkupplungen weitgehend drehstarre und formschlüssige Verbindungen. Dies wird durch ineinander gefügte Außen- und Innenverzahnungen gelöst, wobei der Stand der Technik insbesondere die DIN 5480-Passverzahnung einsetzt. Hierbei treffen zwei miteinander zu kuppelnde Anschlussteile zur Verbindung mit Maschinenwellen aufeinander, die über die Kupplung verbunden werden sollen. Ein erstes Anschlussteil weist hierbei ein Mitnehmerelement auf, gegenüber dem das erste Anschlussteil zwar axialverschieblich gelagert ist, aber in jeder Verschiebungsposition drehfest aufgenommen ist. Dies wird durch das Zusammenspiel einer Innenverzahnung des Mitnehmerelements mit einer Außenverzahnung an dem ersten Anschlussteil erreicht, wobei diese Verzahnung eine ausreichende Dicke aufweist, um auch bei einer gegenseitigen axialen Verschiebung noch genügend Fläche zur Kraftübertragung zu haben und damit noch genügend Drehmoment übertragen zu können.

Soweit eine Zahnkupplung vorliegt, die stromlos öffnet, wird das Mitnehmerelement in der Ruheposition an dem ersten Anschlussteil anliegen und aufgrund einer auslösenden Kraft von diesem weg in Eingriff mit einem zweiten Anschlussteil rücken.

Dieser Eingriff wird über eine Stirnverzahnung hergestellt, die nur dann eingreift, wenn das Mitnehmerelement auf das zweite Anschlussteil zugerückt wurde. Auch bei einem maximalen Eingriff dieser Stirnverzahnung bleibt die Verzahnung zwischen erstem Anschlussteil und Mitnehmerelement erhalten und die beiden Wellenabschnitte, die über den ersten und den zweiten Anschlussteil mit der Zahnkupplung verbunden sind, sind eingekuppelt.

Eine solche Zahnkupplung arbeitet im Stand der Technik mit einem Mitnehmerelement, das aus einer Mitnehmerscheibe besteht, auf der ein Zahnkranz mit Innenverzahnung angebracht ist. Dies ist deshalb so gewählt, weil die im Stand der Technik übliche DIN 5480-Passinnenverzahnung durch Stoßen eingebracht wird, so dass eine einstückige Herstellung des Mitnehmerelements nicht möglich ist. Hierdurch ergeben sich allerdings einige Aufwendungen. Zum Einen stellt der Zusammenbau der Mitnehmerscheibe und des Innenzahnkranzes zu einem Mitnehmerelement einen zusätzlichen Arbeitsschritt dar, zum Anderen müssen die beiden Teile als Werkstücke separat hergestellt und damit separat in der Drehmaschine aufgespannt und nach der Grundbearbeitung nochmals auf der Wälzfräsmaschine aufgespannt und weiter bearbeitet werden.

Ein entsprechender Arbeitsablauf ergibt sich bei dem ersten Anschlussteil, das ebenfalls in einem Bearbeitungsschritt auf der Drehmaschine und einem anschließenden Abwälzfräsvorgang hergestellt werden muss.

Da diese Arbeitsvorgänge die Herstellung einer Zahnkupplung teuer machen, liegt der Erfindung die Aufgabe zu Grunde, einen Welle-Nabe-Verbinder zur Herstellung einer Zahnkupplung, eine solche Zahnkupplung und ein Herstellungsverfahren für einen Welle-Nabe-Verbinder anzugeben, welche diese zusätzlichen Kosten vermeidet und damit die Herstellungskosten und die Herstellungsdauer einer erfindungsgemäßen Zahnkupplung verringert.

Dies gelingt durch eine Zahnkupplung gemäß den Merkmalen des Anspruchs 1. Weitere sinnvolle Ausgestaltungen einer solchen Zahnkupplung können den Unteransprüchen 2 bis 5 entnommen werden. Ebenfalls wird diese Aufgabe durch ein Verfahren zur Herstellung einer erfindungsgemäßen Zahnkupplung gemäß den Merkmalen des nebengeordneten Anspruchs 6 gelöst.

Erfindungsgemäß ist zunächst ein Welle-Nabe-Verbinder vorgesehen, welcher eine Welle und eine Nabe, im vorliegenden Fall in Form eines ersten Anschlussteils zur Verbindung mit einer Welle und einem Mitnehmerelement als Na- be, umfasst. Der Welle ist ein Zahnrad zugeordnet, das radiale Gegenzahnele- mente zu den radialen Zahnelementen eines Innenzahnkranzes des Mitneh- merelements aufweist. Die Außenkontur des Zahnrads ist hierbei so gebildet, dass sie passgenau in die Innenkontur des Innenzahnkranzes des Mitnehmerelements eingepasst werden kann und somit ideale Voraussetzungen für die Kraftübertra- gung mitbringt. Hierbei ist jedoch eine Kreisbogenverzahnung realisiert, welche auch als Wildhaber-Novikov-Verzahnung bekannt ist. Derartige Verzahnungen sind bereits bei Stirnverzahnungen bekannt, im vorliegenden Fall soll eine solche Verzahnung jedoch für die Außenverzahnung des Zahnrades, bei eine radialer Ausrichtung der Zahnelemente Einsatz finden. Die einzelnen Zahnelemente haben hierbei in axialer Richtung gerade Kanten und Flächen, so dass der Innenzahnkranz des Mitnehmerelements gegenüber dem Zahnrad der Welle axialverschieblich gelagert ist.

Bei der Wildhaber-Novikov-Verzahnung greifen konvexe. halbkreisförmige Zahnelemente in korrespondierende Ausnehmungen im gegenüberliegenden Innenzahnkreis des Mitnehmerelements ein. Konstruktionsbedingt passen die Zahnelemente aufgrund dieser Konstruktion besonders gut in die Ausnehmungen, also die Gegenzahnelemente hinein, so dass bereits mit einer wesentlich geringeren Zahl an Zahnelementen gearbeitet werden kann und dennoch eine ausreichende Kraftübertragung gewährleistet werden kann.

Der besondere Vorteil dieser Konstruktion liegt aber vor allem darin, dass die Herstellung einer solchen Kreisbogenverzahnung nicht über einen Abwälzfräsvorgang erfolgen muss, sondern ohne Weiteres etwa mit einem Fingerfräser durchgeführt werden kann. Dies ermöglicht es, das Mitnehmerelement einstückig herzustellen, weil konstruktionsbedingt auch ein Ausfräsen der Innenzahnkranz-Kontur oberflächlich erreicht werden kann, wenn dies in Form einer Kreisbogenverzahnung erfolgt. Es entfällt damit sowohl der zusätzliche Zusammenbau des Innenzahnkranzes mit einer Mitnehmerscheibe, als auch zusätzliches Aufspannen des Innenzahnkranzes auf der Wälzfräsmaschine. Es wird erhebliche Zeit und Aufwand eingespart und dennoch eine zumindest gleichwertige Lösung bereitgestellt.

Auch ein Härtungsvorgang kann entfallen, weil aufgrund der geringen Verschleiße bei Kreisbogenverzahnungen ein solcher Schritt nicht notwendig ist.

Ein derartiger Welle-Nabe-Verbinder kann sodann in einer Zahnkupplung wie eingangs beschrieben Verwendung finden. Hierbei kann das Mitnehmerelement auf seiner vom ersten Anschlussteil weg zeigenden Seite eine Stirnverzahnung aufweisen, mit der es in eine korrespondierende Stirnverzahnung eines zweiten Anschlussteils eingreifen kann. Durch ein axiales Verschieben des Mitnehmerteils gegenüber dem ersten Anschlussteil in Richtung des zweiten, koaxial angeordneten Anschlussteils bis zu einem Eingriff in dessen Stirnverzahnung kann ein Einkuppelvorgang bewirkt und damit eine Zahnkupplung verwirklicht werden. Das Einkuppeln erfolgt dabei in aller Regel bei einem Stillstand von Kupplung und Wellen, nach einer Drehsynchronisation, oder bei langsamen Drehzahlen mit verhältnismäßig geringen Rotationsenergien, um Beschädigungen der Stirnverzahnungen auf beiden Seiten zu verhindern.

In einer derartigen Zahnkupplung kann das Mitnehmerelement gegenüber dem ersten Anschlussteil in einer Ruheposition gehalten werden, indem es eine Rückstellkraft erfährt, beispielsweise mithilfe einer Feder gegen das erste Anschlussteil gedrückt wird. Damit wäre die stromlos-offen-Variante beschrieben. Drückt eine solche Feder hingegen in die andere Richtung, also das Mitnehmerelement in Kontakt mit dem zweiten Anschlussteil und dessen Stirnverzahnung, so würde es sich um eine stromlosgeschlossen-Variante handeln. Beide Varianten sind ohne weiteres möglich. Durch eine Gegenkraft wird die Rückstellkraft überwunden und die Verbindung geschlossen bzw. geöffnet.

Während der Verschiebung des Mitnehmerelement zwischen einer Ruheposition und einer Betätigungsposition gerät die Stirnverzahnung des Mitnehmerelements zwar in bzw. außer Eingriff der Stirnverzahnung des zweiten Anschlussteils, jedoch bleibt die Innenverzahnung des Mitnehmerelements hierbei stets im Eingriff der Außenverzahnung des ersten Anschlussteils, so dass hier immer eine weitere Mitnahme erfolgt.

Als Gegenkraft zur Überwindung der Rückstellkraft eignet sich beispielsweise eine elektromagnetische Kraft, die über einen Elektromagneten erzeugt werden kann. Ein solcher Elektromagnet kann in das zweite Anschlussteil eingebaut oder diesem zugeordnet sein und auf das Mitnehmerelement einwirken. Hierzu muss in diesem Fall das Mitnehmerelement entweder ganz aus einem ferromagnetischen Material hergestellt sein oder aber ein ferromagnetisches oder permanentmagnetisches Element umfassen, welches auf die elektromagnetische Anziehungskraft reagiert. Durch die Einwirkung des Elektromagneten auf ein solches ferromagnetisches Mitnehmerelement kann dieses aus der Ruheposition in die eingekuppelte Position verschoben werden, so dass die Kupplung über den Elektromagneten schaltbar ist.

In bevorzugter Ausgestaltung weist der Innenzahnkranz des Mitnehmerelements zwei bis sieben, besonders bevorzugt drei, radiale Zahnelemente auf. Eine überschaubare Anzahl an radialen Zahnelementen in einer ausreichenden Größe erlaubt es, unproblematisch die Innenkontur des Mitnehmerelements mit dem Fräswerkzeug zu bearbeiten. Ebenfalls sind die radialen Zahnelemente und damit auch die korrespondierenden radialen Gegenzahnelemente zumindest weitestgehend auf dem Umfang des Innenzahnkranzes gleichmäßig verteilt, so dass die Kraftverteilung im dem Mitnehmerelement ihrerseits gleichmäßig ist und möglichst wenig Lastspitzen an einzelnen Stellen auftreten.

Im Zuge der Herstellung des eingangs beschriebenen Welle-Nabe-Verbinders wird das erste Anschlussteil ebenso wie das Mitnehmerelement jeweils auf einer Drehmaschine gefertigt. Beide Teile können dann in derselben Aufspannung mit dem Fräser bearbeitet werden, so dass ein Umspannen der Werkstücke entfallen kann. Mit einem Fingerfräser können dabei die Konturen ausreichend fein herausgearbeitet werden. Neben dem Umspannen in die Wälzfräsmaschine kann hierdurch auch das Zusammenbauen der im Stand der Technik noch benötigten Mit- nehmerscheibe mit dem separaten Innenzahnkranz entfallen und somit die Her- stelldauer merklich reduziert werden.

Die vorstehend beschriebene Erfindung wird im Folgenden anhand eines Ausführungsbeispiels näher erläutert.

Es zeigen
- Figur 1: ein Welle-Nabe-Verbinder für eine Zahnkupplung gemäß dem Stand der Technik in einer perspektivischen Explosionsdarstellung von schräg oben,
- Figur 2: ein erfindungsgemäßer Welle-Nabe-Verbinder für eine Zahnkupplung in einer perspektivischen Explosionsdar- stellung von schräg oben, sowie
- Figur 3: eine alternative Ausgestaltung eines Welle-Nabe-Verbinders für eine Zahnkupplung in einer perspektivischen Explosionsdarstellung von schräg oben.

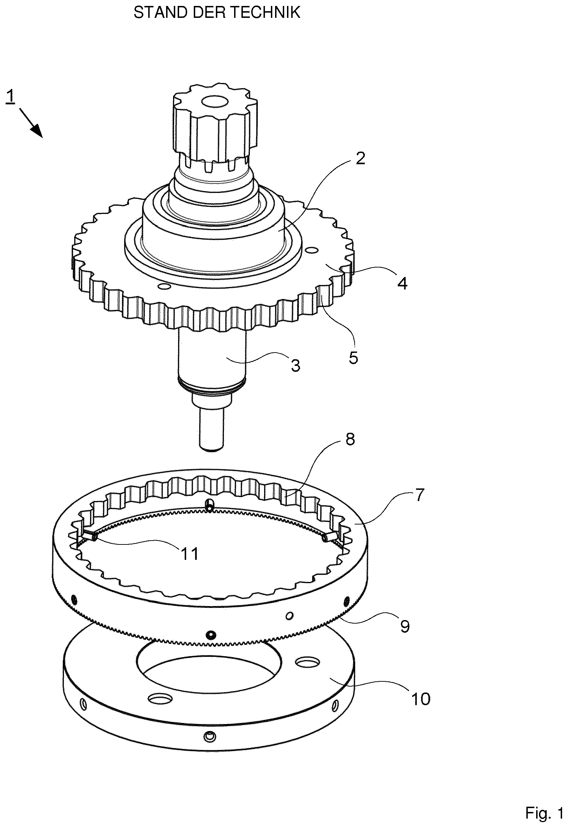

Figur 1 zeigt einen Welle-Nabe-Verbinder, wie er aus dem Stand der Technik bekannt ist. Ein erstes Anschlussteil 2 zum Verbinden mit einem Wellenabschnitt weist ein Zahnrad 4 auf, mit dem es in einen Innenzahnkranz 7 eines Mitnehmerelements 6 eingreift. Das Zahnrad 4 bildet hierbei radiale Gegenzahnelemente 5 zu den radialen Zahnelementen 8 des Innenzahnkranzes 7 aus, die formschlüssig ineinander eingreifen.

Der Stand der Technik kennt hierbei die hier dargestellte DIN 5480-Verzahnung, die aus einer Vielzahl einzelner Zähne besteht, wobei die Außenverzahnung durch Abwälzfräsen und die Innenverzahnung des Gegenstücks durch Stoßen herge- stellt werden müssen. Hierbei wird der Innenzahnkranz 7 vollständig vom Stoßwerkzeug durchgriffen, so dass in einem nachgelagerten Arbeitsschritt eine Mitnehmerscheibe 10 mit dem Innenzahnkranz 7 zu einem Mitnehmerelement 6 ver- bunden werden müssen. Hierzu wird ein Teil des Innenzahnkranzes 7 mit einem weiteren Innendurchmesser hergestellt, in den die Mitnehmerscheibe 10 eingelegt werden kann. Dieser Teil wird dann von Verbindungsstiften 11 durchgriffen, mit deren Hilfe in diesem zusätzlichen Arbeitsschritt die Verbindung zwischen Innenzahnkranz 7 und Mitnehmerscheibe 10 hergestellt wird.

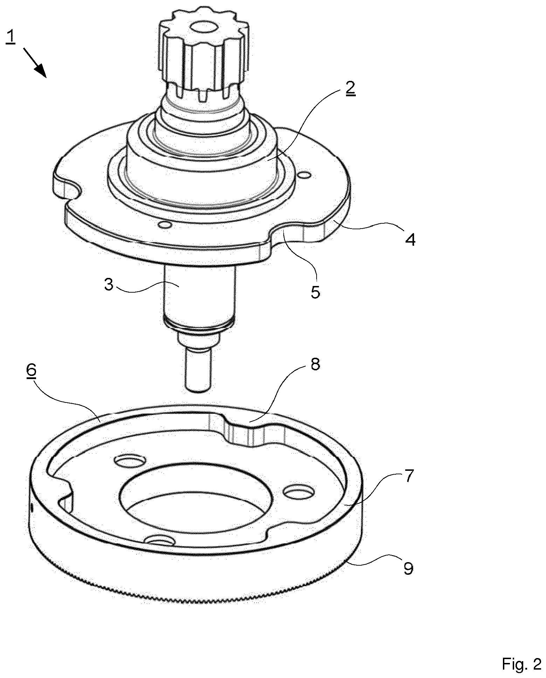

Im Gegensatz hierzu sieht die Erfindung eine deutliche Vereinfachung vor. Figur 2 zeigt eine erfindungsgemäße Lösung, die anstelle der DIN 5480-Verzahnung mit einer Kreisbogenverzahnung nach Wildhaber-Novikov verwendet. Eine solche Kreisbogenverzahnung kann im Falle des Zahnrads 4 mithilfe eines Fräswerkzeugs noch auf der Drehbank bzw. auf einem Bearbeitungszentrum hinzugefügt werden, so dass ein Umspannen und Bearbeiten auf der Wälzfräsmaschine entfallen kann. Im Fall des Mitnehmerelements 6 ist der Vorteil noch erheblich größer, da hier mit dem Fräswerkzeug in einem Durchgang direkt auf der Drehbank bzw. auf einem Bearbeitungszentrum noch die Innenkontur als Vertiefung herausgefräst werden kann. Mitnehmerscheibe und Innenzahnkranz 7 werden damit bei dieser Lösung baueinheitlich und einstückig gefertigt, so dass zusätzliche Arbeitsschritte entfallen können.

Für den Fall einer Verwendung dieses Welle-Nabe-Verbinders 1 in einer Zahnkupplung weist das Mitnehmerelement 6 ferner an seiner Unterseite eine Stirnverzahnung aus axialen Zahnelementen 9 auf, über die ein Eingriff in eine Gegenverzahnung eines zweiten Anschlussteils hergestellt werden kann. In diesem Fall wird das Mitnehmerelement 6 vollständig aus ferromagnetischem Material hergestellt und dem zweiten Anschlussteil ein Elektromagnet zugeordnet, über welchen das Mitnehmerelement 6 betätigt, mithin gegen die Rückstellkraft einer hier nicht gezeigten Feder von dem ersten Anschlussteil 2 weg axial auf das hier ebenfalls nicht gezeigte zweite Anschlussteil zu gezogen wird, um mit der Stirnverzahnung in Eingriff zu gelangen. Der hierbei auftretende Hub ist jedoch nur so groß, dass die radialen Gegenzahnelemente 5 des ersten Anschlussteils 2 weiterhin in Eingriff mit den radialen Zahnelementen 8 des Mitnehmerelements 6 verbleiben und somit die hier nicht gezeigten zu verbindenden Wellenabschnitte miteinander in Kraftschluss gelangen.

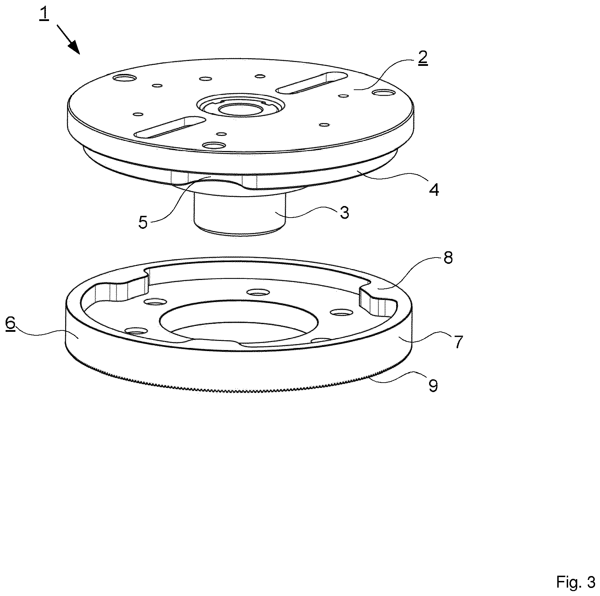

Figur 3 zeigt ein weiteres konstruktiv anders gelöstes Beispiel mit einer Zahnkupplung, die einen Außendurchmesser von 114 mm anstelle der in Figur 2 gezeigten Variante mit 80 mm aufweist. Korrespondierende Elemente sind gleich bezeichnet.

Vorstehend beschrieben ist somit ein Welle-Nabe-Verbinder, der anstelle einer durch Abwälzfräsen hergestellten Passverzahnung eine Kreisbogenverzahnung aufweist, was die Anwendung eines einfacheren, schnelleren und kostengünstigeren Herstellungsverfahrens für derartige Welle-Nabe-Verbinder und damit hergestellte Zahnkupplungen ermöglicht.

### BEZUGSZEICHENLISTE

- 1: Welle-Nabe-Verbinder
- 2: erstes Anschlussteil
- 3: Welle
- 4: Zahnrad
- 5: radiale Gegenzahnelemente
- 6: Mitnehmerelement
- 7: Innenzahnkranz
- 8: radiale Zahnelemente
- 9: axiale Zahnelemente
- 10: Mitnehmerscheibe
- 11: Verbindungsstift

## Patentansprüche

1. Zahnkupplung zur Verbindung zweier Wellenabschnitte, umfassend einen Welle-Nabe-Verbinder (1), wobei der Welle-Nabe-Verbinder (1) umfasst:
- ein erstes Anschlussteil (2),
- ein Mitnehm erelement (6), welches dem ersten Anschlussteil (2) axial verschieblich aber drehfest zugeordnet ist,
- wobei das Mitnehm erelement (6) radiale Zahnelemente (8) zur Ausbildung einer axial verschieblichen Verzahnung mit dem ersten Anschlussteil (2) aufweist,
**dadurch gekennzeichnet, dass**
- die radialen Zahnelemente (8) als einstückig mit dem Mitnehmerelement (6) gebildeter Innenzahnkranz (7) ausgeführt sind, welcher mit radialen Gegenzahnelementen (5) des ersten Anschlussteils (2) eine Kreisbogenverzahnung ausbildet, und wobei das Mitnehm erelement (6) zusätzlich axiale Zahnelemente (9) einer Stirnverzahnung zum Eingriff in eine Gegenverzahnung eines zweiten Anschlussteils aufweist.

2. Zahnkupplung gemäß Anspruch 1, **dadurch gekennzeichnet, dass** das Mitnehmerelement (6) gegenüber dem ersten Anschl ussteil (2) aufgrund einer Rückstellkraft in einer Ruheposition gehalten ist und aufgrund einer Gegenkraft in eine Betätigungsposition verschiebbar ist, wobei der Innenzahnkranz (7) des Mitnehmerelements (6)stets in Eingriff mitden radialen Gegenzahnelem enten (5) des ersten Anschlussteils (2) bleibt.

3. Zahnkupplung gemäß einem der Ansprüche 1 oder 2, **dadurch gekennzeichnet, dass** das Mitnehm erelem ent (6) aus einem ferromagnetischen Material hergestellt ist und mithilfe einer Federkraft gegen das erste Anschlussteil (2) in seine Ruheposition gedrückt wird, wobei dem zweiten Anschlussteil ein Elektromagnet zugeordnet ist, welcher das Mitnehmerelement(6) aufgrund elektromagnetischer Anziehungskraft in eine Betätigungsposition zieht, in der das Mitnehmerelement eine drehfeste Stirnverzahnung mitdem zweiten Anschlussteil eingeht.

4. Zahnkupplung gemäß einem der Ansprüche 1 bis 3, **dadurch gekennzeichnet, dass** der Innenzahnkranz (7) des Mitnehmerelements (6) zwei bis sieben radiale Zahnelemente (8), vorzugsweise genau drei radiale Zahnelemente (8), aufweist, wobei dem ersten Anschlussteil die gleiche Anzahl korrespondierender radialer Gegenzahnelemente (5) zugeordnet sind.

5. Zahnkupplung gemäß Anspruch 4, **dadurch gekennzeichnet, dass** die radialen Zahnelemente (8) gleichmäßig überden Umfang des Innenzahnkranzes (7) verteilt angeordnet sind.

6. Zahnkupplung nach einem der vorstehenden Ansprüche, **dadurch gekennzeichnet, dass**
- die zwischen Innenzahnkranz (7) und den Gegenzahnelementen (5) des ersten Anschlussteils (2) gebildete Kreisbogenverzahnung als Wildhaber-Novikov-Verzahnung ausbildet ist.

## Claims

1. A toothed coupling for connecting two shaft sections, comprising a shaft-hub-connector (1), wherein the shaft-hub connector (1) comprises:
- a first connection part (2),
- a catch element (6), which is associated to the first connection part (2) in an axially displaceably manner, however, torque-proof,
- wherein the catch element (6) includes radial toothed elements (8) for forming an axially displaceable toothing with the first connection part (2),
**characterized in that**
- the radial toothed elements (8) are configured as an internal ring gear (7) integrally formed with the catch element (6), which internal ring gear (7) forms a circular arc toothing with radial toothed counter-elements (5) of the first connection part (2), and wherein the catch element (6) additionally includes axial toothed elements (9) of a spur gearing for the engagement into a counter-toothing of a second connection part.

2. The toothed coupling according to claim 1, **characterized in that**, based on a return force, the catch element (6) is kept in a resting position with regard to the first connection part (2), and based on a counter-force it is displaceable into an actuating position, wherein the internal ring gear (7) of the catch element (6) is always in engagement with the radial toothed counter-elements (5) of the first connection part (2).

3. The toothed coupling according to any of the claims 1 or 2, **characterized in that** the catch element (6) is manufactured from ferromagnetic material and pressed into the resting position thereof by means of a spring force against the first connection part (2), wherein an electromagnet is associated to the second connection part, which electromagnet, based on the electromagnetic force of attraction, pulls the catch element (6) into an actuating position, in which the catch element engages into a torque-proof spur toothing with the second connection part.

4. The toothed coupling according to any of the claims 1 to 3, **characterized in that** internal ring gear (7) of the catch element (6) includes two to seven radial toothed elements (8), preferably exactly three radial toothed elements (8), wherein the same amount of corresponding radial toothed counter-elements (5) is associated to the first connection part.

5. The toothed coupling according to claim 4, **characterized in that** the radial toothed elements (8) are disposed to be equally distributed over the circumference of the internal ring gear (7).

6. The toothed coupling according to any of the preceding claims, **characterized in that**
- the circular arc toothing formed between the internal ring gear (7) and the toothed counter-elements (5) of the first connection part (2) is configured as Wildhaber- Novikov-gears.

## Revendications

1. Accouplement à dents pour la connexion de deux sections d'arbres, comportant un connecteur arbre-moyeu (1), dans lequel le connecteur arbre-moyeu (1) comporte :
- une première pièce de raccordement (2),
- un élément entraîneur (6), lequel est associé à la première pièce de raccordement (2) de façon axialement déplaçable, cependant de façon à résister à la rotation,
- dans lequel l'élément entraîneur (6) comprend des éléments dentés (8) pour la formation d'une denture axialement déplaçable avec la première pièce de raccordement (2),
**caractérisé en ce que**
- les éléments dentés (8) radiaux sont aménagés formées intégralement avec l'élément entraîneur (6) comme couronne à denture intérieure (7), laquelle avec des contre-éléments dentés (5) radiaux de la première pièce de raccordement (2) aménage une denture en arc de cercle, et dans lequel l'élément entraîneur (6) comprend additionnellement des éléments dentés (9) axiaux d'une denture droite pour l'engrènement dans une contre-denture d'une deuxième pièce de raccordement.

2. Accouplement à dents selon la revendication 1, **caractérisé en ce qu'**en raison d'une force de rappel, l'élément entraîneur (6) est tenu dans une position de repos par rapport à la première pièce de raccordement (2) et en raison d'une contre-force il est déplaçable dans une position d'actionnement, dans lequel la couronne à denture intérieure (7) de l'élément entraîneur (6) reste toujours en engrènement avec les contre-éléments dentés (5) radiaux de la première pièce de raccordement (2).

3. Accouplement à dents selon l'une des revendications 1 ou 2, **caractérisé en ce que** l'élément entraîneur (6) est fait de matière ferromagnétique et avec l'aide d'une force de ressort il est pressé dans sa position de repos contre la première pièce de raccordement (2), dans lequel un électroaimant est associé à la deuxième pièce de raccordement, lequel électroaimant en raison de la force d'attraction électromagnétique attire l'élément entraîneur (6) dans une position d'actionnement, dans laquelle l'élément entraîneur engage dans une denture droite résistante à la rotation avec la deuxième pièce de raccordement.

4. Accouplement à dents selon l'une des revendications 1 à 3, **caractérisé en ce que** la couronne à denture intérieure (7) de l'élément entraîneur (6) comprend deux à sept éléments dentés (8) radiaux, de préférence exactement trois éléments dentés (8) radiaux, dans lequel le nombre exact de contre-éléments dentés (5) radiaux correspondants est associé à la première pièce de raccordement.

5. Accouplement à dents selon la revendication 4, **caractérisé en ce que** les éléments dentés (8) radiaux sont agencés distribués également sur la circonférence de la couronne à denture intérieure (7).

6. Accouplement à dents selon l'une des revendications précédentes, **caractérisé en ce que**
- la denture en arc de cercle aménagée entre la couronne à denture intérieure (7) et les contre-éléments dentés (5) de la première pièce de raccordement (2) est aménagée comme engrenage Wildhaber- Novikov.
